# EUROPEAN PATENT APPLICATION

(11) **EP 4 518 102 A1**
(43) Date of publication of application: **05.03.2025**
(21) Application number: 22930173.4
(22) Date of filing: 27.04.2022
(51) Int. Cl.: H02K 1/276

(54) **INTERIOR PERMANENT MAGNET ROTOR AND ROTATING ELECTRIC MACHINE**

(71) Applicant: Kabushiki Kaisha Toshiba, Minato-ku Tokyo 105-0023 (JP); Toshiba Infrastructure Systems & Solutions Corporation, Kawasaki-shi, Kanagawa 212-8585 (JP)
(72) Inventor: MATSUBARA, Masakatsu, Kawasaki-shi, Kanagawa 212-8585 (JP); KANO, Masaru, Kawasaki-shi, Kanagawa 212-8585 (JP); MORI, Daisuke, Kawasaki-shi, Kanagawa 212-8585 (JP); SASAKI, Naoya, Kawasaki-shi, Kanagawa 212-8585 (JP)
(74) Representative: AWA Sweden AB
(86) International application number: PCT/JP2022/019037
(87) International publication number: WO 2023/209851

(57) **Abstract**

According to an embodiment, an interior magnet rotor (100) includes: a rotor shaft extending in an axial direction; a rotor core (120) having two permanent magnet housing holes (121) that are formed in a radially outer portion of the rotor core, disposed with circumferential intervals therebetween and arranged across each d-axis; and plate-shaped permanent magnets (130) respectively housed in the permanent magnet housing holes (121). The permanent magnet housing hole (121) is communicated with an outside of an outer peripheral surface of the rotor core (120), and the permanent magnet housing hole (121) has gaps (121f, 121g) between the permanent magnet (130) and a housing portion that houses the permanent magnet (130), and the gaps (121f, 121g) are filled with a filler.

## Description

### FIELD

The present invention relates to an interior magnet rotor and a rotary electric machine.

### BACKGROUND

In the rotary electric machine having the interior magnet rotor, through-holes extending in an axial direction are formed in regions near a radially outer side in the rotor core to house permanent magnets. Typically, this through-hole has not only a space to house the permanent magnet but also partial spaces at a radially outer side and inner side. These partial spaces are flux barriers that suppress passage of magnetic fluxes.

In many cases, top bridges, which are part of the rotor core, are present between the radially outer partial space and an outer surface of the rotor core to strengthen a structure of the rotor core.

The top bridges serve as paths of magnetic fluxes caused by the permanent magnet, that is, magnetic paths. The magnetic fluxes that pass through the magnetic paths become leakage fluxes that stay only inside the rotor and are not interlinked with stator side, leading to low torque efficiency of the rotary electric machine.

On this background, there are cases of rotors using a method that removes the top bridges and connects the above-mentioned radially outer flux barriers to a space outside the rotor core (a gap space between the rotor and stator).

### PRIOR ART DOCUMENT

### PATENT DOCUMENT

Patent Document 1: Japanese Patent Application Laid-open No. 2020-182358

### SUMMARY OF THE INVENTION

### PROBLEMS TO BE SOLVED BY THE INVENTION

In an interior magnet rotor without top bridges, while leakage fluxes can be reduced as described above, excessive bending stress is generated in center bridges on a radially inner side when a circumferential load is applied to the magnet and the rotor core on an outer peripheral side of the magnet due to the rotor torque. Therefore, it is necessary to make the center bridges thicker, but this increases leakage fluxes and reduces torque performance.

An object of the present invention is to provide a rotary electric machine that enables prevention of excessive bending stress on the center bridges in an interior magnet rotor without top bridges.

### MEANS FOR SOLVING THE PROBLEMS

To achieve the above object, an interior magnet rotor according to an embodiment of the present invention comprises: a rotor shaft extending in an axial direction; a rotor core attached to a radially outer side of the rotor shaft, and having two permanent magnet housing holes that are formed in a radially outer portion of the rotor core, disposed with circumferential intervals therebetween, and arranged across each d-axis; and plate-shaped permanent magnets respectively housed in the permanent magnet housing holes, wherein the permanent magnet housing hole is communicated with an outside of an outer peripheral surface of the rotor core, the permanent magnet housing hole has gaps between the permanent magnet and a housing portion that houses the permanent magnet, and the gaps are filled with a filler.

### BRIEF DESCRIPTION OF THE DRAWINGS

FIG. 1 is a cross-sectional view illustrating a configuration of a rotary electric machine according to a first embodiment.
FIG. 2 is a partial cross-sectional view illustrating a configuration of an inter-pole portion of an interior magnet rotor according to the first embodiment.
FIG. 3 is a partial cross-sectional view illustrating a configuration of an inter-pole portion of a modification example of the interior magnet rotor according to the first embodiment.
FIG. 4 is a partial cross-sectional view illustrating a configuration of an inter-pole portion for explaining an effect of the interior magnet rotor according to the first embodiment.
FIG. 5 is a partial cross-sectional view illustrating a configuration of an inter-pole portion of an interior magnet rotor according to a second embodiment.

### DETAILED DESCRIPTION

An interior magnet rotor and a rotary electric machine according to embodiments of the present invention will be described below with reference to the drawings. Identical or similar parts will be denoted by common reference signs and a redundant description thereof will be omitted here.

### [First Embodiment]

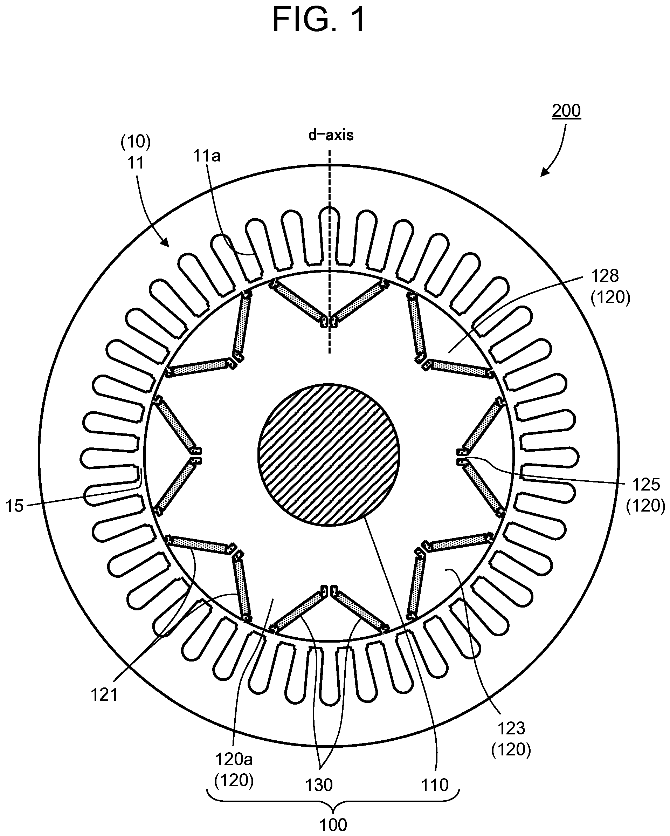

FIG. 1 is a cross-sectional view illustrating a configuration of a rotary electric machine 200 according to a first embodiment.

The rotary electric machine 200 includes: an interior magnet rotor 100 having a rotor shaft 110 extending in a rotation-axis direction (axial direction), a rotor core 120 attached to the rotor shaft 110, and a plurality of permanent magnets 130; a stator 10; and two bearings (not illustrated) by which the rotor shaft 110 is rotatably supported.

A plurality of permanent magnet housing holes 121 are formed in the rotor core 120. In detail, two permanent magnet housing holes 121 are formed across each d-axis and center bridge 125, in a V-shaped arrangement projecting radially inward. FIG. 1 illustrates only one of eight d axes. Note that though FIG. 1 illustrates the case where there is only one layer of the V-shaped arrangement as an example, this is not restrictive. The V-shaped arrangement may be formed in a plurality of layers in a radial direction.

The permanent magnet 130 is plate-shaped. Though FIG. 1 illustrates the case where the permanent magnet 130 is flat plate-shaped as an example, the permanent magnet 130 may have, for example, a curved shape in its cross-section perpendicular to the rotation axis of the rotor shaft 110 (vertical cross-section).

The stator 10 has a cylindrical stator core 11, which is disposed to surround the rotor core 120 on a radially outer side of the rotor core 120 with a gap 15 therebetween and formed with stator teeth 11a. A plurality of stator teeth 11a are formed on an inner peripheral side of the stator 10, and disposed with circumferential intervals therebetween, for winding a non-illustrated stator winding.

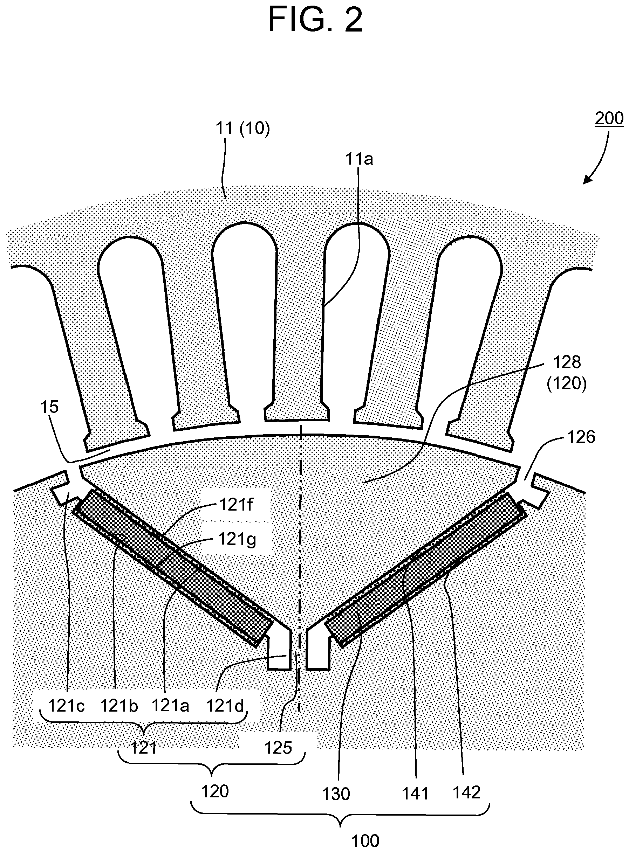

FIG. 2 is a partial cross-sectional view illustrating a configuration of an inter-pole portion of the interior magnet rotor 100 according to the first embodiment. FIG. 2 illustrates a portion around one d-axis.

As mentioned above, with respect to the d-axis, the two permanent magnet housing holes 121 are formed in the V-shaped arrangement projecting radially inward across the center bridge 125.

Each permanent magnet housing hole 121 has a holding space formed by an outer wall 121a and an inner wall 121b to hold the permanent magnet 130, an outer space 121c adjacent to the radially outer side of the holding space, and an inner space 121d adjacent to the radially inner side of the holding space.

The outer space 121c is communicated with the gap 15 through an opening 126 formed on an outer peripheral surface of the rotor core 120. As a result, a fan-shaped portion 128 is formed in the rotor core 120, sandwiched between the two permanent magnet housing holes 121, with the center bridge 125 as a keystone of the fan.

A distance between the outer wall 121a and inner wall 121b of each permanent magnet housing hole 121 is formed to be larger than a thickness of the permanent magnet 130. Therefore, an outer gap 121f and inner gap 121g are formed between the outer wall 121a and the permanent magnet 130, and between the inner wall 121b and the permanent magnet 130, respectively.

The outer gap 121f and inner gap 121g are filled with a filler to form a filling portion 141 and filling portion 142, respectively. Here, the filler is, for example, a molding material such as a polymer compound or an adhesive.

A total width of each of the outer gap 121f and inner gap 121g is constant, but the percentage of each is not limited. One of the gaps may be from 0% to 100% of the other, that is, the gap may be biased one way or the other.

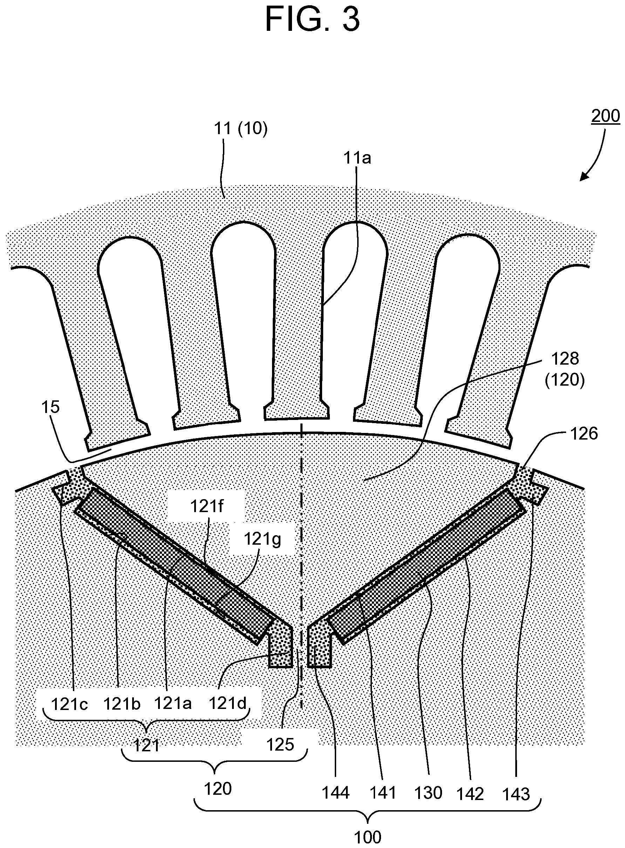

FIG. 3 is a partial cross-sectional view illustrating a configuration of an inter-pole portion of a modification example of the interior magnet rotor 100 according to the first embodiment.

In this modification example, in addition to the example illustrated in FIG. 2, the outer space 121c and inner space 121d are also filled with the filler to form a filling portion 143 and filling portion 144, respectively.

Next, operations and effects of this embodiment and modification example will be explained.

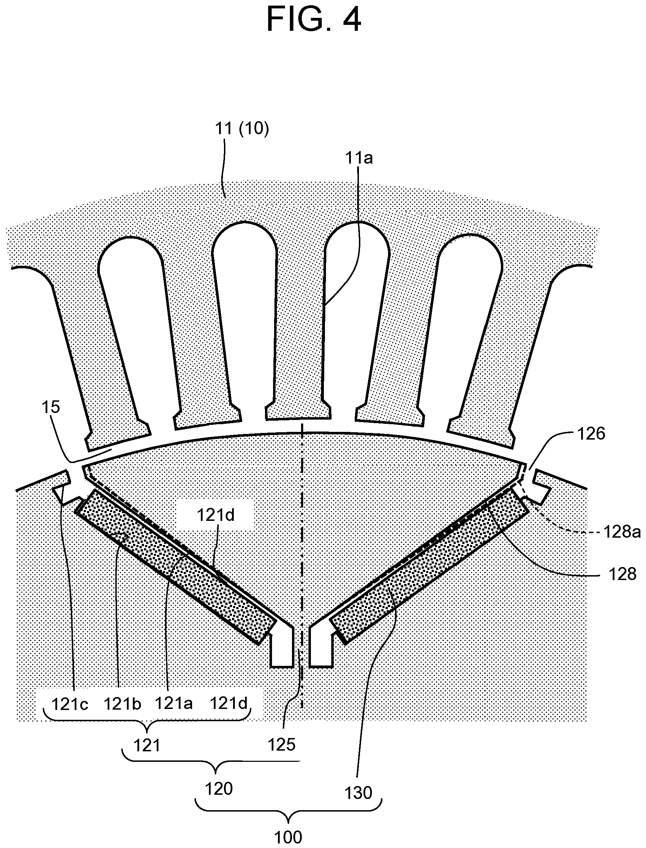

FIG. 4 is a partial cross-sectional view illustrating a configuration of an inter-pole portion for explaining the effect of the interior magnet rotor 100 according to the first embodiment. Common parts with the embodiment will be denoted by the same reference signs, for convenience of explanation.

FIG. 4 illustrates a conventional case in which, unlike the present embodiment and modification example, the filling portion is not formed in the permanent magnet housing hole 121. In the conventional case, the gaps corresponding to the outer gap 121f and inner gap 121g as in this embodiment are not formed by intended way, but there is a gap, which is necessary to insert the permanent magnet 130 into the permanent magnet housing hole 121.

During rotation of the interior magnet rotor 100, a circumferential load is applied to the permanent magnets 130 and the fan-shaped portion 128 due to the torque. In particular, an excessive load is added during acceleration or deceleration. This circumferential load causes excessive bending stress on the center bridge 125.

On the other hand, in the present embodiment and modification example, the fan-shaped portion 128 and adjacent portions of the rotor core 120 are mechanically integrated with each other at least through the filling portions 141 and 142. As a result, the load added to the fan-shaped portion 128 is transferred to the adjacent portions of the rotor core 120, and no bending stress on the center bridge 125 is generated.

Therefore, there is no need to take a measure to increase the width of the center bridge 125 to ensure rigidity of the center bridge 125, which would result in increased leakage flux.

### [Second Embodiment]

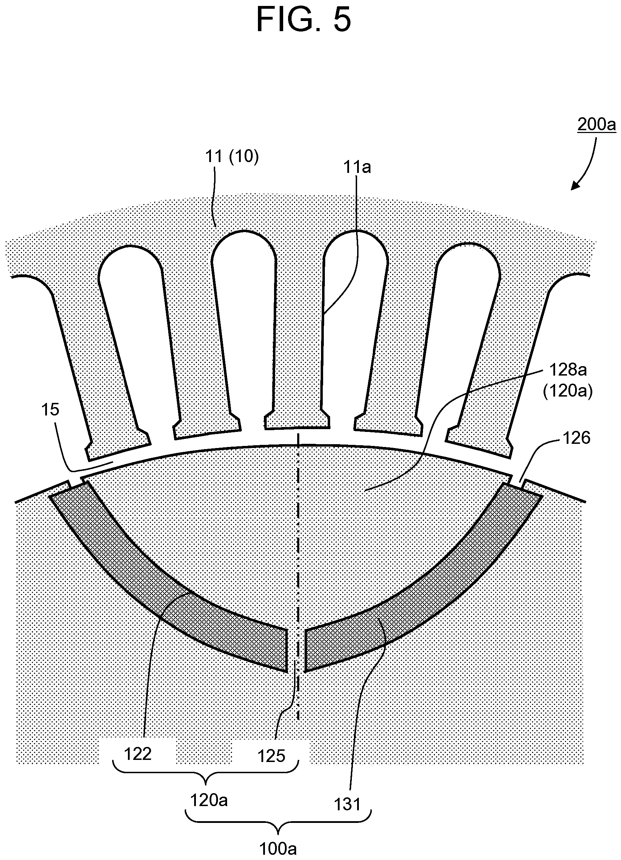

FIG. 5 is a partial cross-sectional view illustrating a configuration of an inter-pole portion of an interior magnet rotor 100a according to a second embodiment.

The present embodiment is a modification of the first embodiment. The interior magnet rotor 100a of a rotary electric machine 200a in this embodiment has permanent magnets 131 instead of the permanent magnets 130 in the first embodiment.

Here, the permanent magnet 131 is a bond magnet. The permanent magnet 131 is formed by filling a permanent magnet housing hole 122 with the bond magnet. Therefore, no gap is formed between the permanent magnet 131 and the permanent magnet housing hole 122, unlike the first embodiment.

In FIG. 5, the permanent magnet 131 is not flat plate-shaped but aspect-shaped in the width direction, but the shape is not restrictive. For example, the permanent magnet housing hole 122 may be formed to house a flat plate-shaped permanent magnet.

In this embodiment formed as described above, the fan-shaped portion 128 and the adjacent portions of the rotor core 120 are mechanically integrated with each other through the permanent magnets 131. As a result, the load added to the fan-shaped portion 128 is transferred to the adjacent portions of the rotor core 120, and no bending stress on the center bridge 125 is generated.

According to the embodiments described above, it is possible to provide a rotary electric machine that makes it possible to prevent the occurrence of excessive bending stress on center bridges in an interior magnet rotor without top bridges.

### [Other Embodiments]

While certain embodiments have been described, these embodiments have been presented by way of example only, and are not intended to limit the scope of the inventions. Further, the features of the embodiments may be combined. The embodiments may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE NUMERALS

10 ... stator, 11 ... stator core, 11a ... stator tooth, 15 ... gap, 100 ... interior magnet rotor, 110 ... rotor shaft, 120 ... rotor core, 121, 121a... permanent magnet housing hole, 121a ... outer wall, 121b ... inner wall, 121c ... outer space, 121d ... inner space, 121f ... outer gap, 121g ... inner gap, 122 ... permanent magnet housing hole, 125 ... center bridge, 126 ... opening, 128, 128a ... fan-shaped portion, 130, 131 ... permanent magnet, 141, 142, 143, 144 ... filling portion, 200 ... rotary electric machine

## Claims

1. An interior magnet rotor comprising:
a rotor shaft extending in an axial direction;
a rotor core attached to a radially outer side of the rotor shaft, and having two permanent magnet housing holes that are formed in a radially outer portion of the rotor core, disposed with circumferential intervals therebetween, and arranged across each d-axis; and
plate-shaped permanent magnets respectively housed in the permanent magnet housing holes, wherein
the permanent magnet housing hole is communicated with an outside of an outer peripheral surface of the rotor core,
the permanent magnet housing hole has gaps between the permanent magnet and a housing portion that houses the permanent magnet, and
the gaps are filled with a filler.

2. The interior magnet rotor according to claim 1, wherein
the filler is also filled in portions other than the housing portion in the permanent magnet housing hole.

3. The interior magnet rotor according to claim 1 or claim 2, wherein
the filler is a molding material or an adhesive.

4. An interior magnet rotor comprising:
a rotor shaft extending in an axial direction;
a rotor core attached to a radially outer side of the rotor shaft, and having two permanent magnet housing holes that are formed in a radially outer portion of the rotor core, disposed with circumferential intervals therebetween and arranged across each d-axis; and
permanent magnets respectively housed in the permanent magnet housing holes, wherein
the permanent magnet housing hole is communicated with an outside of an outer peripheral surface of the rotor core, and
the permanent magnet is a bond magnet and is filled into the permanent magnet housing hole.

5. A rotary electric machine comprising:
the interior magnet rotor according to claim 1 or claim 4; and
a stator disposed on a radially outer side of the rotor core.
